# DEMANDE DE BREVET EUROPEEN

(11) **EP 1 428 706 A1**
(43) Date de publication de la demande: **16.06.2004**
(21) Numéro de dépôt: 03364039.2
(22) Date de dépôt: 12.12.2003
(51) Int. Cl.: B60J 5/00, B60J 5/04

(54) **Porte de véhicule automobile à structure centrale d'assemblage, structure centrale, procédés de fabrication et de démontage/remontage et véhicule correspondants**

(30) Priorité: 13.12.2002 FR 0216061
(71) Demandeur: WAGON AUTOMOTIVE SNC, 79302 Bressuire Cédex (FR)
(72) Inventeur: M. Moreau, Stéphane, 49300 Le Puy Saint Bonnet (FR)
(74) Mandataire: Bioret, Ludovic

(57) **Abrégé**

L'invention a pour objet une porte de véhicule automobile, comprenant au moins un panneau (20) formant au moins partiellement le plan de la porte, caractérisée en ce qu'elle comprend une structure centrale de maintien dudit panneau (20), comprenant deux barreaux (21), (22) montés de part et d'autre dudit panneau (20) et solidarisés l'un à l'autre de façon à pincer et maintenir ledit panneau (20).

## Description

Le domaine de l'invention est celui des véhicules automobiles. Plus précisément, l'invention concerne la fabrication et la maintenance, l'entretien ou la modification de portes pour ces véhicules automobiles.

Classiquement, une portière (ou porte) de véhicule automobile présente une partie inférieure pleine, et une partie supérieure vitrée. Généralement, la partie vitrée est définie par un cadre supérieur, dans lequel une vitre vient se loger. Ce cadre est formé dans la structure de la portière.

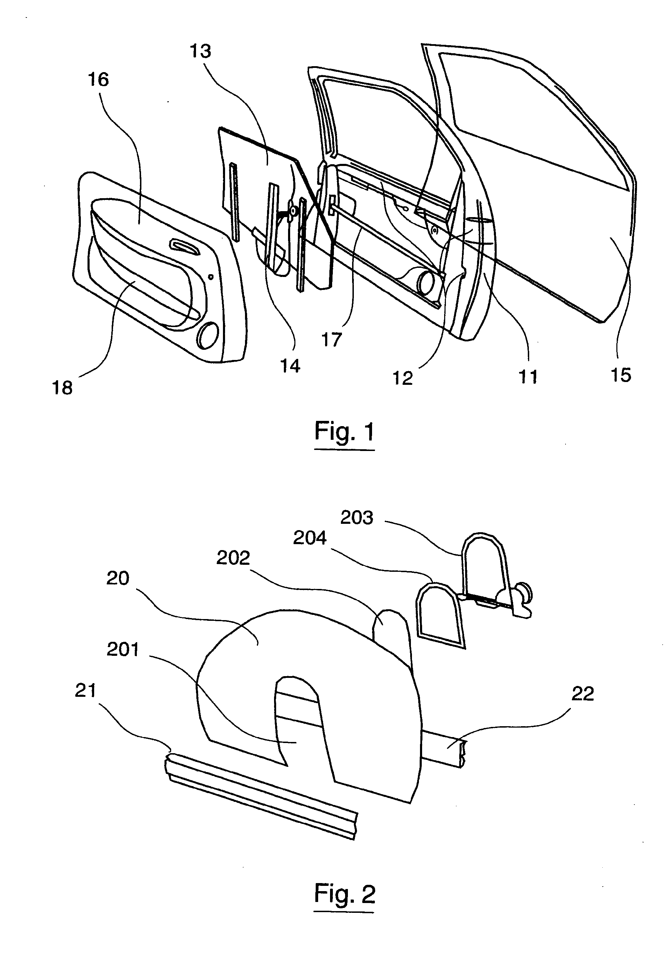

Un exemple de portière de ce type, qui correspond à la plupart des portières actuellement installées sur des véhicules, est illustré en figure 1. Une telle portière présente un élément de structure 11, à l'intérieur duquel sont montés les moyens 12 d'ouverture et de verrouillage de la portière, ainsi qu'une vitre 13 et le mécanisme 14 permettant son coulissement, dans une fente prévue à cet effet, ménagée dans la partie inférieure de la portière.

On rapporte ensuite un panneau de carrosserie extérieur 15, et un garnissage intérieur 16.

Les portières de ce type présentent de nombreux inconvénients. Elles supposent un nombre important de composants à assembler, et leur assemblage est long et délicat à mettre en oeuvre, en particulier en ce qui concerne la vitre coulissante 13, qui doit être mis en place très précisément.

L'équipement permettant le déplacement de la vitre 13, qu'il s'agisse d'un mécanisme manuel ou électrique, est complexe, lourd et encombrant.

De plus, le fait que la vitre puisse prendre place à l'intérieur de la partie inférieure de la portière pose divers problèmes, tant sur le plan de la sécurité (positionnement et dimensionnement des renforts latéraux 17), que de l'esthétique ou de l'ergonomie (dimensionnement des rangements 18, largeur aux coudes...).

La présence d'un cadre supérieur solidaire de la partie inférieure, tant sur l'élément de structure 11 que sur le panneau de carrosserie 15, rend également peu aisés la fabrication et le montage de la portière, d'autant plus qu'un joint adapté doit être mis en place dans ce cadre, pour assurer l'étanchéité.

De plus, les portières de ce type sont relativement lourdes, ce qui n'est pas toujours souhaitable tant en termes de conception globale du véhicule qu'en termes de manipulation pour l'utilisateur final.

Certains constructeurs ont présenté des véhicules dont les portières ne présentent pas de tels cadres supérieurs, la vitre assurant seule l'obturation de la partie supérieure. Dans ce cas, d'autres problèmes peuvent apparaître, liés en particulier à la rigidité de l'ensemble et à l'étanchéité. En tout état de cause, la fabrication, le montage et la maintenance restent complexes.

En outre, cette technique rend difficiles, longues et coûteuses, les interventions sur ces portes, par exemple pour changer une vitre endommagée, ou pour remplacer une vitre fixe par une vitre possédant une ouverture. Une telle opération n'est actuellement pas possible, et suppose le changement complet de la porte.

Par ailleurs, pour certains véhicules (notamment les véhicules utilitaires, les véhicules à caractère ludique...), il n'est pas toujours utile que toutes les portières (ou certaines d'entre elles) soient équipées d'une vitre coulissante dans la partie inférieure de la porte ou, à tout le moins, il est possible de réduire notablement les dimensions de cette vitre coulissante.

Dans ce cas, la structure traditionnelle des portières telle que décrite précédemment s'avère relativement inadaptée, en ce qu'elle est démesurément complexe, longue à réaliser et par conséquent coûteuse en considération de l'usage qui est fait des portières de ces véhicules.

L'invention a notamment pour objectif de pallier ces inconvénients de l'art antérieur.

Plus précisément, l'invention a pour objectif de proposer une portière pour véhicule automobile qui soit notablement plus simple et plus rapide à réaliser que les portières traditionnelles.

L'invention a également pour objectif de fournir une telle portière qui permette d'envisager des réductions importantes les coûts de fabrication et de montage correspondants.

L'invention a aussi pour objectif de fournir une telle portière dont la maintenance peut être assurée rapidement et aisément, et à coût réduit.

Un autre objectif de l'invention est de fournir une telle portière qui soit notablement plus légère que les portières traditionnelles.

L'invention a encore pour objectif de proposer des procédés de fabrication, de montage et de remontage d'une telle portière, qui puissent être mis en oeuvre de façon aisée et rapide.

Ces objectifs, ainsi que d'autres qui apparaîtront par la suite, sont atteints grâce à l'invention qui a pour objet une porte de véhicule automobile, comprenant au moins un panneau formant au moins partiellement le plan de la porte, comprenant une structure centrale de maintien dudit panneau, comprenant deux barreaux montés de part et d'autre dudit panneau et solidarisés l'un à l'autre de façon à pincer et maintenir le ou lesdits panneaux.

De cette façon, l'assemblage et la rigidité de la portière sont obtenus essentiellement grâce à la structure centrale.

On comprend donc que la réalisation d'une portière selon l'invention est obtenue par la simple association d'un panneau de porte couplé à une structure centrale (ou de deux panneaux reliés par l'intermédiaire de la structure centrale). En d'autres termes, une telle portière ne nécessite aucunement la mise en oeuvre d'un cadre délimitant une partie supérieure (tel que rappelé précédemment).

On évite par conséquent tous les problèmes inhérents au cadre supérieur en termes de fabrication, de montage, et d'obtention de l'étanchéité de la portière.

De plus, l'invention propose une portière de conception « épurée » permettant d'obtenir des gains notables en termes de poids de la portière.

Selon une solution préférée, l'un desdits panneaux forme une partie supérieure de ladite porte, lesdits deux barreaux étant montés de part et d'autre de ladite partie supérieure et solidarisés l'un à l'autre de façon à pincer et maintenir la base de ladite partie supérieure.

Selon une autre approche avantageuse, un desdits panneaux forme une partie inférieure de ladite porte, lesdits deux barreaux étant montés de part et d'autre de ladite partie inférieure et solidarisés l'un à l'autre de façon à pincer et maintenir la portion supérieure de ladite partie inférieure.

Selon un mode de réalisation avantageux, la structure centrale reçoit simultanément une partie supérieure et une partie inférieure. Dans ce cas, les bases de ladite partie supérieure et le bord supérieur de ladite partie inférieure peuvent présenter des formes complémentaires destinées à s'emboîter au moins partiellement l'une dans l'autre, lesdites formes complémentaires comprenant préférentiellement une crénelure.

Un tel agencement permet de faciliter le positionnement des panneaux inférieur et supérieur l'un par rapport à l'autre, et contribue à assurer une bonne rigidité de la portière.

On note par ailleurs que le principe de l'invention permet d'envisager des gammes de fabrication modulaires des portières. En effet, une telle portière peut être constituée, outre la structure centrale, d'un panneau supérieur (vitré ou non) seulement, d'un panneau inférieur (lui-même éventuellement vitré) seulement, ou bien à la fois d'un panneau supérieur et d'un panneau inférieur. Quelque soit les constituants de la portière, le principe d'assemblage et de montage reste le même.

Selon une solution avantageuse, ladite structure centrale porte au moins une charnière permettant l'ouverture et la fermeture de ladite porte.

Préférentiellement, ladite structure centrale porte des moyens d'ouverture et de fermeture de ladite porte.

La structure centrale ainsi constituée exerce alors plusieurs fonctions, et notamment celle d'assurer la liaison avec le ou les panneaux de la portière, ainsi que celle d'assurer le rôle intrinsèque d'une portière, à savoir son ouverture et sa fermeture.

Préférentiellement, lesdits barreaux sont métalliques.

Bien entendu, selon d'autres modes de réalisation envisageables, ces barreaux pourront être réalisés en tout autre matériau dont les caractéristiques permettent d'assurer une rigidité suffisante, et notamment des matières plastiques ou composites.

Avantageusement, lesdits barreaux sont solidarisés par l'une au moins des techniques appartenant au groupe suivant :
- vissage ;
- système à cames.

De telles techniques permettent de réaliser rapidement et aisément le montage de la portière, et sont également avantageuses en ce qu'elles permettent d'effectuer tout aussi aisément et rapidement son démontage, notamment dans le cadre d'une opération de maintenance.

Préférentiellement, lesdits barreaux sont solidarisés par vissage, un premier desdits barreaux présentant au moins un insert taraudé, le second desdits barreaux présentant un appui pour une tête de vis correspondante.

Selon une autre caractéristique, l'un au moins desdits barreaux porte des moyens de positionnement par rapport audit panneau et/ou par rapport à l'autre desdits barreaux.

Selon une solution préférée, au moins un élément tampon est prévu entre ledit panneau et au moins un desdits barreaux, ledit élément tampon étant préférentiellement réalisé en une matière souple déposée entre lesdits barreaux et ledit panneau.

Une telle caractéristique permet de passer d'une configuration de portière sans panneau vitré à une configuration avec panneau vitré, sans qu'il soit nécessaire de prévoir des pièces supplémentaires.

Préférentiellement, un diabolo est monté dans chaque ouverture ménagée dans ledit panneau pour protéger celle-ci du passage d'une vis.

Cette caractéristique s'avère particulièrement avantageuse dans le cas selon lequel l'un au moins des panneaux est vitré, un tel diabolo évitant le risque que le verre du panneau soit endommagé au contact du métal des vis (ou autres moyens de fixation) lors de la mise en place de celles-ci.

Avantageusement, au moins un desdits barreaux est solidarisé audit panneau par collage.

De cette façon, l'assemblage de la structure centrale avec le panneau peut être réalisé en limitant, voire en supprimant les perçages dans l'un au moins des panneaux.

Selon encore une autre caractéristique, une platine est rapportée sur ledit second barreau présentant un appui pour une tête de vis, ladite platine étant équipée de moyens de solidarisation audit second barreau. Dans ce cas, lesdits moyens de solidarisation comprennent préférentiellement au moins une agrafe et/ou au moins un indexeur.

Avantageusement, ladite partie supérieure est une vitre ne présentant pas de cadre périphérique.

Selon une variante avantageuse, ladite partie supérieure présente au moins une ouverture susceptible d'être obturée ou libérée par un panneau mobile. Dans ce cas, ledit panneau mobile se trouve préférentiellement dans le plan de ladite partie supérieure, lorsqu'il se trouve en position d'obturation de ladite ouverture, les moyens permettant la mobilité dudit panneau mobile étant avantageusement montés sur ladite partie supérieure.

Selon un mode de réalisation de cette variante, ladite ouverture définit un guichet, ladite partie supérieure définissant un « U » renversé.

Selon une solution préférée, ladite structure centrale est démontable, de façon que ledit panneau puisse être remplacé.

L'invention concerne également une structure centrale pour la réalisation d'une portière telle que décrite précédemment.

L'invention concerne aussi un procédé de fabrication d'une part, et un procédé de démontage/remontage d'autre part, d'une portière telle que décrite précédemment.

L'invention concerne encore un véhicule automobile comprenant au moins une portière telle que décrite précédemment.

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
- la figure 1, déjà commentée en préambule est une vue éclatée d'une portière selon l'art antérieur ;
- la figure 2 est une vue éclatée d'une portière selon l'invention ;
- la figure 3 est une vue d'une étape de montage d'une portière selon l'invention ;
- la figure 4 est une vue d'un mode de réalisation particulier des panneaux inférieur et supérieur d'une portière selon l'invention ;
- la figure 5 est une vue en coupe d'une portière selon l'invention, au niveau de sa structure centrale ;
- la figure 6 est une vue d'une portière selon l'invention, prête à être montée sur un véhicule ;
- la figure 7 illustre les étapes d'un procédé de fabrication d'une portière selon l'invention ;
- la figure 8 illustre les étapes d'un procédé de démontage/remontage d'une portière selon l'invention.

Comme mentionné plus haut, l'invention propose une approche tout à fait nouvelle des portières pour véhicules automobiles, reposant sur l'assemblage d'une structure centrale composée de deux barreaux avec au moins un panneau. Préférentiellement, c'est cette structure centrale qui regroupe les éléments fonctionnels (charnière, serrure, rétroviseur,...).

En référence à la figure 2, une portière de véhicule automobile conforme à l'invention comprend au moins :
- un panneau 20 formant partie de la portière ;
- une structure centrale composée de deux barreaux 21, 22 métalliques destinés à être montés de part et d'autre du panneau 20 et à être solidarisés l'un à l'autre en vue de pincer et de maintenir le panneau 20.

Selon le présent mode de réalisation, le panneau 20 est une partie supérieure vitrée de portière présentant une ouverture 201 (présentant en l'occurrence une forme de U renversé qui définit un guichet) susceptible d'être obturée par un panneau mobile 202.

Selon une solution préférée de ce mode de réalisation, les moyens 203 permettant la mobilité du panneau mobile 202 (ainsi qu'un joint d'étanchéité 204) sont montés sur le panneau 20, ces moyens 203 étant conçus de telle sorte que le panneau mobile 202 se trouve dans le plan du panneau 20 lorsque le panneau mobile est en position d'obturation de l'ouverture 201 (en application par exemple des différentes techniques développées par le titulaire).

Bien que les moyens assurant le guidage et le maintien peuvent être, au moins en partie, montés sur la structure centrale, il est avantageux qu'ils soient uniquement solidaires du panneau correspondant, pour simplifier le montage, le démontage et le remontage, selon les techniques décrits par la suite.

Tel que cela apparaît clairement, on note que le panneau supérieur vitré ne présente aucun cadre à sa périphérie. Toutefois, il n'est pas incompatible de rapporter un tel cadre périphérique, par exemple en le solidarisant à la structure centrale de façon similaire à celle opérée pour la solidarisation du ou des panneaux de la portière. Le panneau supérieur peut également porter un joint d'étanchéité.

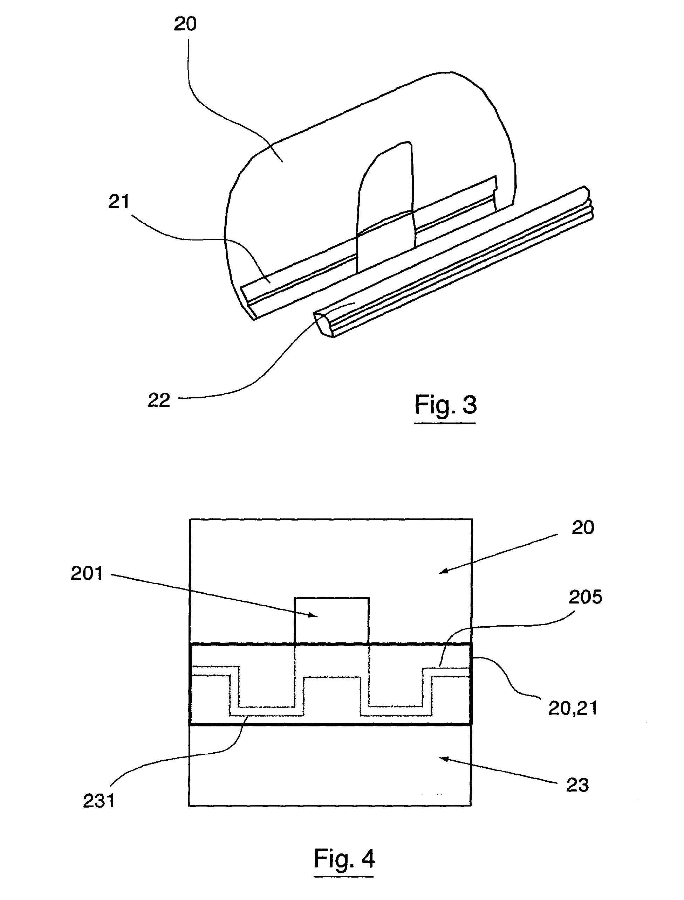

En référence à la figure 3, on prévoit de coller le barreau extérieur 21 au panneau vitré 20, l'autre barreau 22 étant solidarisé par vissage à l'ensemble ainsi obtenu.

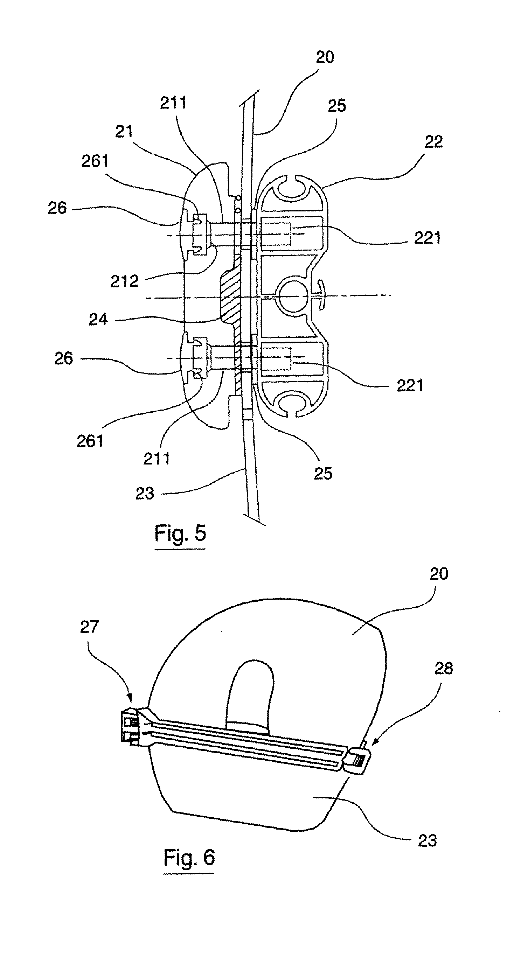

Les caractéristiques structurelles de la structure centrale sont illustrées plus en détail par la figure 5, qui est une vue en coupe d'une portière selon l'invention, au niveau de sa structure centrale.

Tel qu'indiqué précédemment, la structure centrale comprend un barreau extérieur 21 et un barreau intérieur 22 venant ensemble pincer et maintenir un panneau 20.

La solidarisation des barreaux est assurée par exemple par vissage, le barreau 22 incluant des inserts taraudés 221, le barreau 21 présentant quant à lui des alésages 211 dont la partie terminale 212 forme une surface d'appui pour une tête de vis de fixation.

Les formes et les dimensions des barreaux peuvent bien sûr être adaptées, en fonction d'exigences techniques ou esthétiques.

On note que la portière illustrée par les figures 4 à 6 comprend également un panneau inférieur 23 pincé et maintenu par les barreaux 21 et 22 de façon similaire au panneau 20.

En outre, en vue d'éviter un contact métal/verre, un élément tampon 24 est prévu entre le panneau vitré 20 et le barreau 21, cet élément tampon étant par exemple obtenu par le dépôt d'une matière souple entre le panneau 20 et le barreau 21.

De plus, toujours en vue d'éviter un contact métal/verre (le matériau métallique étant cette fois celui des vis de fixation), on prévoit également la mise en place de diabolos 25 dans le ou les perçages du panneau 20 (ainsi qu'éventuellement dans le ou les perçages du panneau 23).

Par ailleurs, des moyens de finition sont rapportés sur le barreau 21 de façon à masquer les éléments de fixation. Ces moyens de finition sont formés par des platines 26 portant des agrafes prévues pour venir s'encliqueter sur le barreau 21.

On note également que le barreau 21 et/ou le barreau 22 peuvent porter des indexeurs (non représentés) permettant de positionner les barreaux l'un par rapport à l'autre, ainsi que par rapport au panneau 20 (et éventuellement par rapport au panneau 23).

Tel que déjà précisé, la portière selon l'invention peut comprendre :
- seulement un panneau supérieur ;
- seulement un panneau inférieur ;
- un panneau supérieur et un panneau inférieur.

Chacun de ces panneaux peut être opaque ou transparent (tôle ou vitre, par exemple) et peut présenter une ou plusieurs ouvertures.

Dans le cas où la portière comprend à la fois un panneau supérieur et un panneau inférieur, des moyens sont prévus pour positionner les panneaux l'un par rapport à l'autre.

Cet aspect apparaît clairement sur la figure 4.

Tel qu'illustré, les panneaux 20 et 23 présentent avantageusement des formes complémentaires destinées à s'emboîter l'une dans l'autre.

Ces formes complémentaires sont ici constituées par des crénelures 205 et 231 ménagées respectivement dans les panneaux 20 et 23. Bien entendu, de nombreuses autres formes complémentaires peuvent être envisagées en vue d'obtenir un résultat similaire.

La figure 6 présente une portière selon l'invention, équipée de façon que celle-ci soit prête à être montée sur un véhicule.

Cet équipement inclut une charnière 27 ainsi qu'une commande d'ouverture 28. Comme déjà précisé, ces éléments sont solidaires de la structure centrale.

La portière selon l'invention peut donc être livrée au constructeur du véhicule correspondant soit en pièces détachées (la gamme de montage étant très simple et pouvant être effectuée par une personne non spécialisée), soit montée et pré-équipée telle qu'illustrée par la figure 6.

Un avantage de l'invention est qu'il est aisé de réaliser plusieurs types de porte (avec ou sans partie vitrée ; avec ou sans ouverture,...) à partir d'éléments de base simples, et en conservant la même structure centrale.

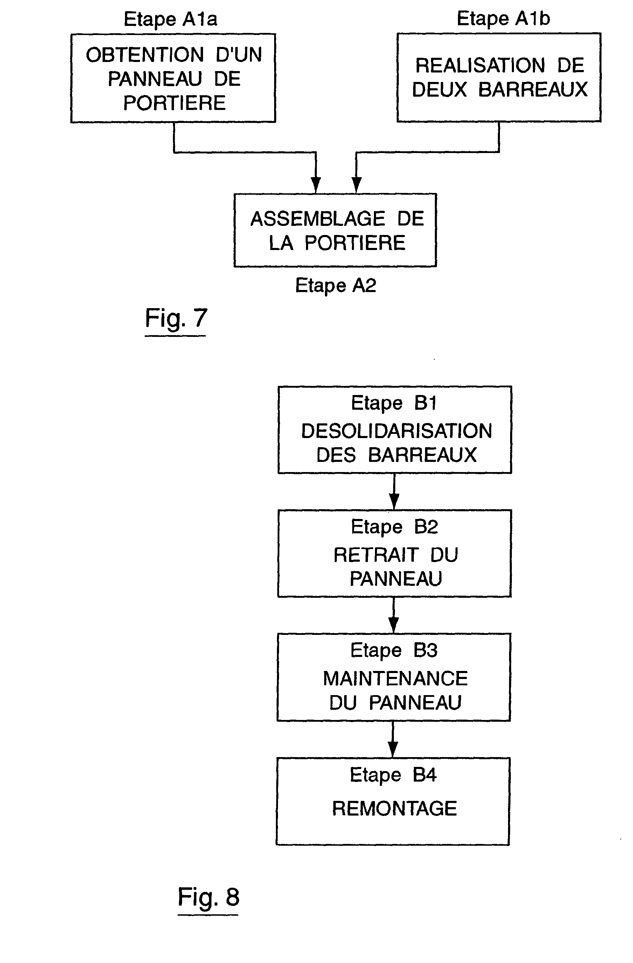

Le procédé de fabrication d'une portière selon l'invention va maintenant être explicité en référence à la figure 7.

Dans une première phase, on fabrique les panneaux de portière (étape A1a) ainsi que les barreaux (étape A1b).

Dans un second temps, l'étape A2 d'assemblage de la portière consiste essentiellement à positionner les barreaux de part et d'autre du ou des panneaux puis à solidariser les barreaux entre eux, le ou les panneaux étant alors maintenus entre les barreaux par pincement.

Bien entendu, l'étape d'assemblage peut inclure d'autres sous-étapes mentionnées précédemment, tel que notamment le collage de l'un des barreaux sur l'un des panneaux, le dépôt d'un élément tampon entre le ou les barreaux et le ou les panneaux, la pose de diabolos, la pose de platines...

Selon un mode de réalisation préférentiel de l'invention, l'assemblage des barreaux avec le ou les panneaux est prévu de telle sorte que la structure centrale soit démontable en vue de la maintenance, voire du remplacement du ou des panneaux.

Cet aspect permet la mise en oeuvre de façon simple d'un procédé de démontage/remontage d'une portière selon l'invention, tel que celui illustré par la figure 8.

Selon une première étape B1, l'opérateur désolidarise les barreaux en procédant au démontage des vis de fixation (les platines éventuelles ayant été au préalable retirées).

Le panneau est ensuite retiré (étape B2), notamment en procédant à l'enlèvement du barreau extérieur (la vitre pouvant être supportée par les éventuels indexeurs). L'opérateur peut ainsi retirer la partie vitrée (avec son panneau mobile le cas échéant).

Pendant la maintenance du panneau retiré (étape B3), ou avant le remplacement complet du panneau, l'opérateur peut assembler temporairement le barreau extérieur et le barreau intérieur (resté monté sur le véhicule).

Le remontage (étape B4) s'effectue simplement en procédant de la façon indiquée pour l'étape A2 de la figure 7.

Dans la variante selon laquelle le barreau extérieur est collé à la vitre lors du montage, le principe du procédé de démontage/remontage qui vient d'être décrit reste le même, à la différence près qu'il faut évidemment prévoir la mise en place d'un nouveau barreau extérieur.

Cette technique permet de remplacer l'un des panneaux endommagé sans changer toute la porte, et notamment la partie complexe comprenant les charnières et serrure.

Elles permet également de faire évoluer le véhicule, en changeant l'un des panneaux par une panneau d'un type différent.

## Revendications

1. Porte de véhicule automobile, comprenant au moins un panneau (20) formant au moins partiellement le plan de la porte,
**caractérisée en ce qu'**elle comprend une structure centrale de maintien dudit panneau (20), comprenant deux barreaux (21, 22) montés de part et d'autre dudit panneau (20) et solidarisés l'un à l'autre de façon à pincer et maintenir le ou lesdits panneaux (20).

2. Porte de véhicule automobile selon la revendication 1, **caractérisée en ce qu'**un desdits panneaux (20) forme une partie supérieure de ladite porte, lesdits deux barreaux (21, 22) étant montés de part et d'autre de ladite partie supérieure et solidarisés l'un à l'autre de façon à pincer et maintenir la base de ladite partie supérieure.

3. Porte de véhicule automobile selon la revendication 2, **caractérisée en ce qu'**un desdits panneaux forme une partie inférieure (23) de ladite porte, lesdits deux barreaux (21, 22) étant montés de part et d'autre de ladite partie inférieure et solidarisés l'un à l'autre de façon à pincer et maintenir la portion supérieure de ladite partie inférieure.

4. Porte de véhicule automobile selon les revendications 2 et 3, **caractérisée en ce que** la base de ladite partie supérieure et le bord supérieure de ladite partie inférieure présentent des formes complémentaires (205, 231) destinées à s'emboîter au moins partiellement l'une dans l'autre.

5. Porte de véhicule automobile selon la revendication 4, **caractérisée en ce que** lesdites formes complémentaires (205, 231) définissent une crénelure.

6. Porte de véhicule automobile selon l'une quelconque des revendications 1 à 5, **caractérisée en ce que** ladite structure centrale porte au moins une charnière (27) permettant l'ouverture et la fermeture de ladite porte.

7. Porte de véhicule automobile selon l'une quelconque des revendications 1 et 6, **caractérisée en ce que** ladite structure centrale porte des moyens d'ouverture et de fermeture (28) de ladite porte.

8. Porte de véhicule automobile selon l'une quelconque des revendications 1 à 7, **caractérisée en ce que** lesdits barreaux (21, 22) sont métalliques.

9. Porte de véhicule automobile selon l'une quelconque des revendications 1 et 5, **caractérisée en ce que** lesdits barreaux (21), (22) sont solidarisés par l'une au moins des techniques appartenant au groupe suivant :
- vissage ;
- système à cames.

10. Porte de véhicule automobile selon la revendication 9, **caractérisée en ce que** lesdits barreaux (21), (22) sont solidarisés par vissage et **en ce qu'**un premier desdits barreaux (22) présente au moins un insert taraudé (221), le second desdits barreaux (21) présentant un appui (212) pour une tête de vis correspondante.

11. Porte de véhicule automobile selon l'une quelconque des revendications 1 à 10, **caractérisée en ce que** l'un au moins desdits barreaux (21), (22) porte des moyens de positionnement par rapport audit panneau et/ou par rapport à l'autre desdits barreaux (21), (22).

12. Porte de véhicule automobile selon l'une quelconque des revendications 1 à 11, **caractérisée en ce qu'**au moins un élément tampon (24) est prévu entre ledit panneau (20) et au moins un desdits barreaux (21), (22).

13. Porte de véhicule automobile selon la revendication 12, **caractérisée en ce que** ledit élément tampon (24) est réalisé en une matière souple déposée entre lesdits barreaux (21), (22) et ledit panneau (20).

14. Porte de véhicule automobile selon la revendication 10, **caractérisée en ce qu'**un diabolo (25) est monté dans chaque ouverture ménagée dans ledit panneau (20) pour protéger celle-ci du passage d'une vis.

15. Porte de véhicule selon l'une quelconque des revendications 1 à 14, **caractérisée en ce qu'**au moins un desdits barreaux (21) est solidarisé audit panneau (20) par collage.

16. Porte de véhicule selon la revendication 10, **caractérisée en ce qu'**une platine (26) est rapportée sur ledit second barreau (21) présentant un appui pour une tête de vis, ladite platine (26) étant équipée de moyens de solidarisation audit second barreau (21).

17. Porte de véhicule selon la revendication 16, **caractérisée en ce que** lesdits moyens de solidarisation comprennent au moins une agrafe (261) et/ou au moins un indexeur.

18. Porte de véhicule selon l'une quelconque des revendications 2 à 17, **caractérisée en ce que** ladite partie supérieure est une vitre ne présentant pas de cadre périphérique.

19. Porte de véhicule selon l'une quelconque des revendications 2 à 18, **caractérisée en ce que** ladite partie supérieure présente au moins une ouverture (201) susceptible d'être obturée ou libérée par un panneau mobile (202).

20. Porte de véhicule selon la revendication 19, **caractérisée en ce que** ledit panneau mobile (202) se trouve dans le plan de ladite partie supérieure, lorsqu'il se trouve en position d'obturation de ladite ouverture (201).

21. Porte de véhicule selon l'une quelconque des revendications 19 et 20, **caractérisée en ce que** les moyens permettant la mobilité dudit panneau mobile (202) sont montés sur ladite partie supérieure.

22. Porte de véhicule selon l'une quelconque des revendications 19 à 21, **caractérisée en ce que** ladite ouverture (201) définit un guichet, ladite partie supérieure définissant un « U » renversé.

23. Porte de véhicule selon l'une quelconque des revendications 1 à 22, **caractérisée en ce que** ladite structure centrale est démontable, de façon que ledit panneau (20) puisse être remplacé.

24. Structure centrale pour la réalisation d'une portière comprenant au moins un panneau (20) selon l'une quelconque des revendications 1 à 23, **caractérisée en ce qu'**elle comprend deux barreaux (21), (22) destinés à être montés de part et d'autre dudit panneau (20) et à être solidarisés l'un à l'autre de façon à pincer et maintenir ledit panneau (20).

25. Procédé de fabrication d'une porte de véhicule selon l'une quelconque des revendications 1 à 23, **caractérisé en ce qu'**il comprend les étapes suivantes :
- obtention d'un panneau (20) de porte ;
- assemblage de deux barreaux (21), (22), formant structure centrale, de part et d'autre dudit panneau (20), de façon à le prendre en sandwich.

26. Procédé de démontage/remontage d'une porte de véhicule selon l'une quelconque des revendications 1 à 23, **caractérisé en ce qu'**il comprend les étapes suivantes :
- désolidarisation des barreaux (21), (22) formant structure centrale et venant prendre en sandwich ledit panneau (20) de ladite porte ;
- retrait dudit panneau (20) ;
- mise en place éventuellement d'un nouveau panneau ;
- assemblage desdits deux barreaux (21), (22), de part et d'autre dudit panneau, de façon à le prendre en sandwich.

27. Véhicule automobile **caractérisé en ce qu'**il comprend au moins une portière comprenant un panneau (20) et une structure centrale de maintien dudit panneau, comprenant deux barreaux (21), (22) montés de part et d'autre dudit panneau (20) et solidarisés l'un à l'autre de façon à pincer et maintenir ledit panneau (20).
